# EUROPÄISCHE PATENTSCHRIFT

(11) **EP 1 658 202 B1**
(45) Veröffentlichungstag und Bekanntmachung des Hinweises auf die Patenterteilung: **06.06.2007**
(21) Anmeldenummer: 04738898.8
(22) Anmeldetag: 08.07.2004
(51) Int. Cl.: B60R 21/01

(54) **VERFAHREN ZUR DIGITALEN DATENÜBERTRAGUNG VON EINEM SENSOR ZU EINEM STEUERGERÄT**
METHOD FOR DIGITAL DATA TRANSMISSION FROM A SENSOR TO A CONTROL APPLIANCE
PROCEDE POUR LA TRANSMISSION DE DONNEES NUMERIQUES ENTRE UN DETECTEUR ET UN APPAREIL DE COMMANDE

(30) Priorität: 25.07.2003 DE 10333989
(43) Veröffentlichungstag der Anmeldung: 24.05.2006
(73) Patentinhaber: ROBERT BOSCH GMBH, 70442 Stuttgart (DE)
(72) Erfinder: RECKNAGEL, Rolf-Juergen, 07747 Jena (DE); WELLHOEFER, Matthias, 71701 Schwieberdingen (DE)
(86) Internationale Anmeldenummer: PCT/DE2004/001482
(87) Internationale Veröffentlichungsnummer: WO 2005/012046

(56) Entgegenhaltungen:
- DE-A- 10 121 879
- DE-A- 10 129 945
- DE-A- 10 149 332

## Beschreibung

### Stand der Technik

Die Erfindung geht aus von einem Verfahren zur digitalen Datenübertragung von einem Sensor zu einem Steuergerät nach der Gattung des unabhängigen Patentanspruchs.

Aus DE 102 29 945 A1 ist bereits ein Verfahren zur digitalen Datenübertragung von einem Sensor zu einem Steuergerät bekannt. Dabei wird ein Drucksensorsignal in einen Gleichanteil und einen Differenzdruckanteil zerlegt, wobei der Gleichanteil mit einer niedrigeren Auflösung als der Differenzdruckanteil vom Sensor zum Steuergerät übertragen wird.

### Vorteile der Erfindung

Das erfindungsgemäße Verfahren zur digitalen Datenübertragung von einem Sensor zu einem Steuergerät mit den Merkmalen des unabhängigen Patentanspruchs hat Vorteile. Es ist vorgesehen, dass nunmehr ein linearer Wertebereich mit aufeinanderfolgenden Sensorwerten gebildet wird und daraus ein Wertebereich in Abhängigkeit von einer für das Steuergerät relevanten Größe ein weiterer Wertebereich herausgeschnitten wird, der mit einer größeren Auflösung vom Sensor zum Steuergerät übertragen wird. D .h., die beiden aufgeteilten Wertebereiche sind Teilbereiche des gesamten Wertebereichs. Die beiden Wertebereiche folgen insbesondere aufeinander.
Damit ist es nunmehr möglich, in Abhängigkeit von der Größe die für das Steuergerät relevant ist, den Wertebereich auszuwählen, den das Steuergerät für seine Auswertung bevorzugt benötigt. Dies spart Bankbreite, da nur die wichtigen Werte mit einer hohen Auflösung übertragen werden, und gewährt dennoch eine hohe Auflösung bei diesen wichtigen Werten.

### Einfügungsseite

Aus DE 101 49 332A1, welche die Merkmale des Oberbegriffs des Anspruches 1 zeigt, ist es bekannt, dass von einem Sensor zu einem Steuergerät über eine Zweidrahtleitung Daten mit unterschiedlichen Übertragungsraten, sowie einer unterschiedlichen Auflösung für die Sensorwerte übertragen werden können. Diese unterschiedlichen Übertragungsraten bzw. Auflösungen für die Sensorwerte werden dann in der Sensoridentifikation signalisiert um eine korrekte Verarbeitung zu gewährleisten.

Es ist vorteilhaft, dass die Größe, in Abhängigkeit dessen der Wertebereich ausgewählt wird, der mit einer hohen Auflösung vom Sensor zum Steuergerät übertragen wird, den Wertebereich angibt, in dem die Schwellwerte eines Algorithmus für einen Rückhaltemittel liegen. Dieser Wertebereich wird bereits vorgegeben, wobei dieser Wertebereich durch Simulationen ermittelt wird. Werte die darunter oder darüber liegen, können mit geringerer Auflösung übertragen werden, da hier eine sehr eindeutige Entscheidung bezüglich der Auslösung zu treffen ist. Wichtig sind diese Werte, die sehr nahe an den üblichen Schwellwerten liegen, um hier eine genaue Auslöseentscheidung treffen zu können. Es kann sein, wenn eine bidirektionale Übertragung vom Steuergerät und Sensor vorgesehen ist, dass das Steuergerät solche Größen dem Sensor überträgt. Üblicherweise wird jedoch eine unidirektionale Übertragung vom Sensor zum Steuergerät vorgesehen, wobei der Sensor, der ein ausgelagerter Drucksensor, Beschleunigungssensor, Gewichtssensor oder Pre-Crash-Sensor sein kann, über die Leitung auch zusätzlich mit Energie vom Steuergerät versorgt werden kann, wobei der Sensor seine Daten beispielsweise durch eine Strommodulation auf diese Energieversorgung aufprägt.

Durch die in den abhängigen Ansprüchen aufgeführten Maßnahmen und Weiterbildungen sind vorteilhafte Verbesserungen des im unabhängigen Patentanspruch angegebenen Verfahrens zur digitalen Datenübertragung von einem Sensor zu einem Steuergerät möglich.

Vorteilhafterweise ist der Wertebereich, der mit höherer Auflösung übertragen wird, in der unteren Hälfte des Gesamtwertebereichs der Sensorwerte angeordnet. Ganz hohe Sensorwerte werden zu einer eindeutigen Entscheidung in einem Auslösealgorithmus eines Steuergeräts führen, während niedrigere Werte eine speziellere Untersuchung benötigen, um hier eine richtige und genaue Entscheidung für die Auslösung von Rückhaltemittel wie Airbags oder Gurtstraffer ausführen zu können.

Vorteilhafterweise kann das erfindungsgemäße Verfahren auch für eine Fahrdynamikregelung verwendet werden, also beispielsweise Überrollerkennung und ESP.

### Zeichnung

Ausführungsbeispiele der Erfindung sind in der Zeichnung dargestellt und werden in der nachfolgenden Beschreibung näher erläutert. Es zeigen
Figur 1 eine Datenübertragung zwischen Sensor und Steuergerät,
Figur 2 eine Aufteilung des Wertebereichs und
Figur 3 ein Flussdiagramm des erfindungsgemäßen Verfahrens.

### Beschreibung

Crashsensoren besitzen eine lineare oder anders geartete Kennlinie, mit der die Crashsignale erfasst werden. Ausgelagerte Crashsensoren übertragen diese Daten in einer Codierung zu einem Airbagsteuergerät. Dabei wird der Messbereich linear auf die einzelnen digitalen Übertragungswerte abgebildet.

Dadurch, dass der Messbereich linear auf die einzelnen zulässigen Übertragungswerte verteilt wird, ergibt sich eine feste konstante Auflösung über den gesamten Messbereich. Dies ist jedoch nachteilig, da gewisse Wertebereiche mit einer höheren Auflösung als andere für die Auswertung vorliegen sollten. Beim Drucksensor interessiert beispielsweise der Bereich, in dem die Trennung zwischen Auslösen und Nichtauslösen vorgenommen wird, viel genauer als die Druckverläufe, die ohnehin schon deutlich über der Auslöseschwelle liegen. Solche Auslöseschwellen können festliegen oder aber adaptiv verändert werden. D. h., sie werden in Abhängigkeit von den crashkennzeichnenden Werten adaptiv verändert. Die Veränderung wird dann für eine gewisse Zeit gehalten, um dann in Abhängigkeit von den Crashmerkmalen gegebenenfalls erneut verändert zu werden. Den gesamten Wertebereich mit einer höheren Auflösung zu übertragen, ist oft aus Kostengründen nicht möglich.

Der Wertebereich eines Sensors wird in verschiedene Bereiche aufgeteilt, in denen die Werte wieder linear auf die vorhandenen Auslösungswerte verteilt werden. Allerdings werden beispielsweise im Falle eines Drucksensors der Messbereich z. B. in zwei gleiche Hälfte geteilt. Die erste Hälfte mit den niedrigeren Drucksignalen wird jetzt allerdings auf ¾ der möglichen Übertragungswerte aufgeteilt, während die zweite Hälfte mit den höheren Druckwerten auf das restliche ¼ der möglichen Übertragungswerte linear aufgeteilt wird. Dadurch erhalten die niedrigeren Druckwerte eine höhere Auflösung, während die hohen Druckwerte mit einer niedrigeren Auflösung übertragen werden.

Die Aufteilung der Werte im Bereich erfolgt je nach Sensor und je nach Anforderung an die Genauigkeit in bestimmten Intervallen unterschiedlich und angepasst. Diese Aufteilung kann durch das Schnittstelleninterface, also den Senderbaustein des Sensors realisiert werden. Dabei kann beispielsweise im Falle von Druckwerten die Bitbreite der Datenübertragung mindestens von 16 Bit auf 8 Bit reduziert werden, was eine erhebliche Kostenersparnis und Datenreduktion ermöglicht.

Weitere Anwendungsbeispiele für dieses Verfahren sind beispielsweise Up-Front-Sensoren, periphere Beschleunigungssensoren und Beschleunigungssensoren in dem Steuergerät. Durch die höhere Auflösung der Signale des Up-Front-Sensors bei niedrigeren Beschleunigungen können diese auch für den Fußgängerschutz eingesetzt werden, beispielsweise zur Plausibilität mit anderen Sensoren, beispielsweise Kontaktsensoren. Auch eine LKW-Unterfahrt kann so besser detektiert werden.

Im Falle der peripheren Beschleunigungssensoren und der Sensoren im Steuergerät kann durch eine bessere Auflösung bei kleinen Signalen die Plausibilität und der Crashbeginn genauer bestimmt werden. Die Sensoren können dann auch zur Bestimmung fahrdynamischer Größen herangezogen werden und somit für die Überrollsensierung und ESP genutzt werden. Die Bestimmung der Einbaurichtung zur Überprüfung der Verbaurichtimg wird dadurch auch erleichtert. Da die Pre-Crash-Sensorik eine sehr hohe Datenflut erzeugt, ist das erfindungsgemäße Verfahren auch hier von Vorteil.

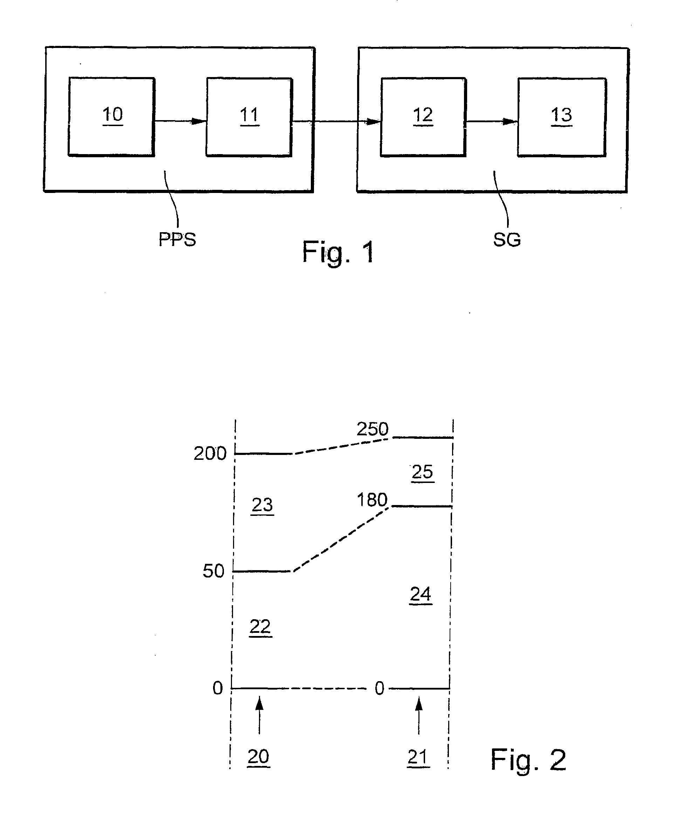

Figur 1 zeigt in einem Blockschaltbild die Übertragung von einem Sensor zu einem Steuergerät. Als Sensor wird hier ein Drucksensor PPS gezeigt, der ein Sensorelement 10 mit nachgeschalteter Elektronik und einem Senderbaustein 11 zur Übertragung der Sensorwerte aufweist. Das Sensorelement überträgt dem Senderbaustein 11 die Sensorwerte. Der Senderbaustein 11 führt die erfindungsgemäße Aufteilung der Sensorwerte in Abhängigkeit von einer Größe, die für das Steuergerät relevant ist durch. Dabei wird hier beispielhaft, der Wertebereich mit einer höheren Auflösung übertragen, in dem die Schwellwerte für die Auswertung des Drucksignals liegen werden. Es sind auch gröbere Aufteilungen möglich, beispielsweise dass nur die untere Hälfte der Drucksensorwerte mit einer höheren Auflösung übertragen wird. Die übertragenen Sensorwerte werden dann von einem Empfängerbaustein 12 im Steuergerät SG empfangen. Hier wird die Auflösung der Sensorwerte rückgängig gemacht, es erfolgt also wieder eine Abbildung der aufgelösten Sensorwerte auf die ursprünglichen Sensorwerte, die dann in einem Prozessor 13 des Steuergeräts SG ausgewertet werden. Hier erfolgt die Auswertung in einem Auslösealgorithmus, um nicht dargestellte angeschlossene Rückhaltemittel bei einem Auslösefall anzusteuern.

Alternativ ist es möglich, anstatt eines Drucksensors PPS periphere Beschleunigungssensoren in der Seite oder in der Fahrzeugfront oder auch Sensoren im Steuergerät selbst mit dem erfindungsgemäßen Verfahren zu verwenden. Anstatt eines Steuergeräts für Rückhaltemittel wie hier dargestellt, sind auch Steuergeräte für eine Fahrdynamikregelung möglich. Auch eine kinematische Sensorplattform kann das erfindungsgemäße Verfahren zur Übertragung seiner Sensorwerte verwenden.

Figur 2 erläutert in einer Darstellung die Aufteilung der Sensorwerte auf die Übertragungswerte. Im Sensorelement 10 können Sensorwerte von 0 bis 200 erzeugt werden, wie es im ersten Abschnitt 20 dargestellt ist. Die Schwellwerte im Steuergerät SG werden jedoch im Bereich 22 liegen, der von 0 bis 50 geht. D. h., der andere Bereich 23 von 50 bis 200 ist nicht so interessant, da dieser Bereich zu einer eindeutigen Auslösung führen wird, da diese Werte stark über den Schwellwerten liegen. Folglich wird der Bereich 22 mit einer höheren Auflösung übertragen. Dies erfolgt durch eine Abbildung auf die möglichen Übertragungswerte 21. Die Übertragungswerte 21 sind hier, 8 Bit, von 0 bis 255. Im ersten Bereich 24 der Übertragungswerte, der von 0 bis 180 geht, werden die Werte aus dem Bereich 22 linear abgebildet und somit mit einer höheren Auflösung übertragen. Der Bereich 23 wird auf den Wertebereich 24 abgebildet und somit mit einer niedrigeren Auflösung zum Steuergerät SG übertragen. Die entsprechende Auflösung kann im Datentelegramm vom Sensor PPS zum Steuergerät SG signalisiert werden.

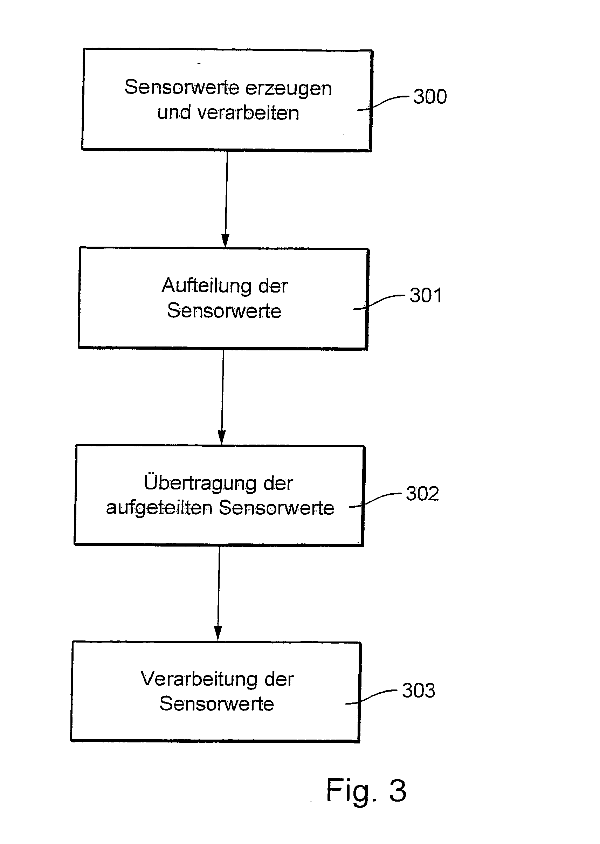

Figur 3 erläutert in einem Flussdiagramm den Ablauf des erfindungsgemäßen Verfahrens. Im Verfahrensschritt 300 werden vom Sensorelement 10 die Sensorwerte erzeugt und in der dazugehörigen Elektronik verstärkt, digitalisiert und gefiltert. Die so digitalisierten Sensorwerte, werden dann dem Senderbaustein 11 zugeführt, der in Verfahrensschritt 301 die Sensorwerte erfindungsgemäß aufteilt. Der Senderbaustein 301 führt in Abhängigkeit von der Größe, die für das Steuergerät relevant ist, hier die möglichen Schwellenwerte für den Auslösealgorithmus, die Aufteilung der Sensorwerte durch. Er wählt den Wertebereich, in dem die Schwellwerte vorkommen können, für die Übertragung mit höherer Auflösung aus, während er den Wertebereich der außerhalb liegt, mit niedrigerer Auflösung überträgt. In Verfahrensschritt 302 erfolgt dann die Übertragung der so aufgeteilten Sensorwerte. In Verfahrensschritt 303 werden vom Steuergerät SG mittels des Empfängerbausteins 12 die Sensorwerte empfangen und dem Prozessor 13 zur Verarbeitung im Auslösealgorithmus zugeführt.

Beispielhaft wird ein Sensorwert gemäß Figur 2 48 erzeugt. Dieser liegt im Bereich 22. Folglich wird dieser Messwert 48 mit höherer Auflösung aus dem Bereich 24 übertragen. Hier werden dann beispielhaft die Übertragungswerte 168 bis 171 für diesen Messwert 48 verwendet.

## Patentansprüche

1. Verfahren zur digitalen Datenübertragung von einem Sensor (PPS) zu einem Steuergerät (SG), wobei Sensorwerte (20) des Sensors (PPS) für die Datenübertragung , mit verschiedenen Auflösungen (24, 25) aufgeteilt werden, wobei die Sensorwerte einen ersten Wertebereich (22, 23) mit aufeinanderfolgenden Sensorwerten bilden und wobei die Aufteilung des ersten Wertebereichs (22, 23) für die Datenübertragung in Abhängigkeit von einer für das Steuergerät (SG) relevanten Größe erfolgt,
**dadurch gekennzeichnet, dass** die Größe ein zweiter Wertebereich (22) von Schwellwerten eines Auslösealgorithmus für Rückhaltemittel ist, wobei die Sensorwerte (22) im zweiten Wertebereich mit einer höheren Auflösung (24) vom Sensor (PPS) zum Steuergerät (SG) übertragen werden.

2. Verfahren nach Anspruch 1, **dadurch gekennzeichnet, dass** der zweite Wertebereich (22) aus der unteren Hälfte des ersten Wertebereichs (20) ausgewählt wird.

3. Verwendung eines Senderbausteins (11) in einem Sensor (PPS) zur Durchführung des Verfahrens nach einem der Ansprüche 1 bis 2.

4. Verwendung eines Empfängerbausteins (12) in einem Steuergerät (SG) zur Durchführung des Verfahrens nach einem der Ansprüche 1 bis 2.

## Claims

1. Method for digital data transmission from a sensor (PPS) to a controller (SG), with sensor values (20) of the sensor (PPS) being split with different resolutions (24, 25) for data transmission, with the sensor values forming a first value range (22, 23) with successive sensor values, and with the first value range (22, 23) for data transmission being split as a function of a variable which is relevant for the controller (SG),
**characterized in that** the variable is a second value range (22) of threshold values of an initiation algorithm for restraint means, with the sensor values (22) in the second value range being transmitted with a higher resolution (24) from the sensor (PPS) to the controller (SG).

2. Method according to Claim 1, **characterized in that** the second value range (22) is selected from the lower half of the first value range (20).

3. Use of a transmitter module (11) in a sensor (PPS) for carrying out the method according to one of Claims 1 or 2.

4. Use of a receiver module (12) in a controller (SG) for carrying out the method according to one of Claims 1 or 2.

## Revendications

1. Procédé de transmission de données numériques entre un capteur (PPS) et un appareil de commande (SG), les valeurs (20) fournies par le capteur (PPS) pour la transmission de données étant réparties selon des résolutions différentes (24, 25), selon lequel
les valeurs du capteur forment une première plage de valeurs (22, 23) avec des valeurs successives et
la répartition de la première plage de valeurs (22, 23) pour la transmission des données se fait en fonction d'une grandeur caractéristique de l'appareil de commande (SG),
**caractérisé en ce que**
la grandeur est une seconde plage (22) de valeurs de seuil d'un algorithme de déclenchement des moyens de retenue de sécurité,
les valeurs des capteurs (22) étant transmises dans une seconde plage de valeur avec une résolution (24) plus élevée par le capteur (PPS) vers l'appareil de commande (SG).

2. Procédé selon la revendication 1,
**caractérisé en ce que**
la seconde plage de valeur (22) est sélectionnée dans la moitié inférieure de la première plage de valeur (20).

3. Utilisation d'un composant d'émetteur (11) dans un capteur (PPS) pour la mise en oeuvre du procédé selon l'une des revendications 1 et 2.

4. Utilisation d'un composant de récepteur (12) dans un appareil de commande (SG) pour la mise en oeuvre du procédé selon l'une des revendications 1 et 2.
